# EUROPÄISCHE PATENTSCHRIFT

(11) **EP 0 799 881 B1**
(45) Veröffentlichungstag und Bekanntmachung des Hinweises auf die Patenterteilung: **26.06.2002**
(21) Anmeldenummer: 97105536.3
(22) Anmeldetag: 03.04.1997
(51) Int. Cl.: C10G 45/32, C10G 65/06

(54) **Verfahren zur Gewinnung von Cyclopentan und/oder Cyclopenten aus teilhydriertem Pyrolysebenzin**
Process for obtaining cyclopentane and/or cyclopentene from partially hydrogenated pyrolysis gasoline
Procédé pour l'obtention de cyclopentane et/ou de cyclopentene à partir d'essence de pyrolise partiellement hydrogénée

(30) Priorität: 04.04.1996 DE 19613617
(43) Veröffentlichungstag der Anmeldung: 08.10.1997
(73) Patentinhaber: BASF AKTIENGESELLSCHAFT, 67056 Ludwigshafen (DE)
(72) Erfinder: Kanne, Ulrich, Dr., 67227 Frankenthal (DE); Heners, Jürgen, Dr., 67098 Bad Dürkheim (DE); Krug, Thomas, 67549 Worms (DE)
(74) Vertreter: Kinzebach, Werner, Dr.

(56) Entgegenhaltungen:
- FR-A- 1 588 428

## Beschreibung

Die Erfindung betrifft ein Verfahren zur Gewinnung von Cyclopentan und/oder Cyclopenten sowie von n-/iso-Pentan-Gemischen mit variablem Verhältnis der beiden Komponenten, aus teilhydriertem Pyrolysebenzin einer Steamcrackeranlage, durch optimierte Kombination von Destillations- und Hydrierschritten.

Cyclopentan wird beispielsweise als Ersatzstoff für die bezüglich der Schädigung der Atmosphäre bedenklichen FCKWs und HFCKWs als Treibmittel für Polyurethan-Systeme zur Herstellung von Hartschäumen für die Isolierung von Kühlschränken eingesetzt.

Cyclopenten dient als wichtige Ausgangsverbindung bei der Synthese einer Reihe interessanter Folgeprodukte.

n-/iso-Pentan-Gemische dienen als Lösungsmittel zum Schäumen von Polymeren, wie Polystyrol und Phenolharzen sowie als Treibmittel für Aerosole.

Beim Steamcracken von Naphtha anfallendes Pyrolysebenzin wird vor seiner destillativen Aufarbeitung einer Selektivhydrierung unterzogen, um die enthaltenen Diene und Acetylene selektiv in die entsprechenden Alkane und Alkene zu überführen.

Die Aufarbeitung des Pyrolysebenzins zielt in der Regel auf die Isolierung des für weitere chemische Synthesen wichtigen C₆-C₈-Schnittes, der die aromatischen Kohlenwasserstoffe, wie Benzol, Toluol und die Xylole enthält. Dazu wird in einer Destillationskolonne der C₅-Schnitt, welcher unter anderem ein Gemisch aus Cyclopentan und Cyclopenten mit einem Anteil von insgesamt 15 bis 20 Gew.-% enthält, über Kopf abgetrennt.

Das japanische Patent JP 03153636 A2 beschreibt die gezielte Herstellung von Cyclopentan aus einer C₅-Fraktion der thermischen Naphthaspaltung, die Di- und Monoolefine (z.B. 1,3-Pentadien und Cyclopenten) enthält. Nach einer ersten katalytischen Hydrierung erhält man ein Gemisch aus 7,9 % Cyclopentan; 18,7 % Cyclopenten (Σ Cyclo-C₅ 26,6 %) und 65 % 1,3-Pentadien. Dieses wird zur Beseitigung der störenden Diene einer Polymerisation mit AlCl₃ unterzogen, wobei nach Abtrennung der Polymeren und des Katalysators ein Produktgemisch mit 32 % Cyclopentan; 34 % Cyclopenten und 2 % 1,3-Pentadien erhalten wird. Anschließende katalytische Hydrierung an einem Pd-Katalysator ergibt eine 95 %ige Überführung des Cyclopentens in Cyclopentan.

Die Herstellung von Cyclopenten aus einem, ebenfalls aus der Naphthaspaltung stammenden, dienhaltigen C₅-Kohlenwasserstoffgemisch wird in der FR-A- 1.588.428 beschrieben. Dabei werden Pyrolysegase aus dem Crackprozeß mit hohem Dienanteil (25 % Diene; 1 % Cyclopenten; 4,6 % Cyclopentadien; und 0,52 % Cyclopentan) selektiv an einem Ni-Katalysator hydriert, um die enthaltenen Diolefine in Monoolefine umzuwandeln. Das Produkt der Hydrierung, bestehend aus 3,5 % Dienen; 4,8 % Cyclopenten; 0,9 % Cyclopentadien und 0,54 % Cyclopentan wird drei aufeinanderfolgenden, kontinuierlichen Säulendestillationen unterworfen, um so 90 % des Cyclopentens mit einer Reinheit von über 97 % zu isolieren.

Die gezielte Isolierung von Cyclopentan und/oder Cyclopenten aus Eduktgemischen, die die gewünschten cyclischen C₅-Kohlenwasserstoffe nur in geringen Konzentrationen und mit einem hohen Gehalt an störenden Dienen enthalten, ist zu aufwendig.
Ziel der Erfindung ist die Entwicklung eines Verfahrens zur Gewinnung von Cyclopentan in mehr als 95 Gew.-% Reinheit und/oder von Cyclopenten sowie von n-/iso-Pentan-Gemischen mit variablem Verhältnis aus höher als bisher angereicherten und dienfreien C₅-Gemischen, so daß ein Verfahrensschritt, die Polymerisation an AlCl₃, entfallen kann.
Das erfindungsgemäße Verfahren ist dadurch gekennzeichnet, daß man einer Destillationskolonne, in der das teilhydrierte Pyrolysebenzin fraktioniert wird, an einem geeigneten Boden seitlich ein C₅-Kohlenwasserstoffgemisch mit einer erhöhten Konzentration an Cyclopentan und Cyclopenten entnimmt, dieses Gemisch entweder durch fraktionierte Destillation in Cyclopentan und Cyclopenten zerlegt oder einer katalytischen Hydrierung und anschließend einer fraktionierten Destillation zur Gewinnung von Cyclopentan unterwirft.

Eine besondere Ausführungsart des erfindungsgemäßen Verfahrens ist dadurch gekennzeichnet, daß man das C₅-Kohlenwasserstoffgemisch mit erhöhter Konzentration an Cyclopentan und Cyclopenten etwa 5 Böden unterhalb des Kopfabzugs bis etwa 5 Böden oberhalb des Feed, insbesondere etwa 10 Böden unterhalb des Kopfabzugs bis etwa 10 Böden oberhalb des Feed, besonders bevorzugt etwa 15 Böden unterhalb des Kopfabzugs bis etwa 15 Böden oberhalb des Feed, als flüssigen Seitenabzug der Destillationskolonne entnimmt. Nach einer bevorzugten Ausführungsform des erfindungsgemäßen Verfahrens verwendet man z.B. eine 60-bödige Kolonne, wobei der Feed auf Boden 30 und der Seitenabzug auf Boden 45 erfolgt, wobei die Kolnne beispielsweise bei 1,7 bar arbeitet. Dieser Seitenstrom enthält im Gemisch der C₅-Kohlenwasserstoffe Cyclopenten (ca. 10 bis 30 Gew.-%) und Cyclopentan (ca. 10 bis 30 Gew.-%) in deutlich höheren Konzentrationen als im Kopfprodukt. Gleichzeitig können auf diese Weise die bei der weiteren Verarbeitung störenden, restlichen, niedriger siedenden und im wesentlichen über Kopf gehenden C₃- und C₄-Kohlenwasserstoffe minimiert werden. Durch optimale Wahl des Abzugsbodens wird die Konzentration der höher siedenden C₆-Komponenten, die bei der Einstellung der Spezifikation des Cyclopentans bedeutsam sind, auf ein Minimum begrenzt.

Das im Seitenabzug entnommene Gemisch mit Σ Cyclopentan/Cyclopenten > 40 % wird einer katalytischen Hydrierung zugeführt. Bei etwa 40°C bis 180°C und 10 bis 40 bar wird das enthaltene Cyclopenten in Cyclopentan überführt, wie auch die begleitenden Olefine zu Aliphaten umgesetzt. Auf diese Weise wird die folgende Destillation wesentlich vereinfacht. Die Abtrennung der Leichtsieder (n-/iso-Pentan) und C₆-Kohlenwasserstoffe gelingt in einer abschließenden Destillation.

Alternativ zur Hydrierung der ungesättigten Kohlenwasserstoffe, u.a. des Cyclopentens, kann dieses für weitere Synthesen im Gemisch mit Cyclopentan isoliert werden, indem das primär im Seitenabzug der Kolonne anfallende, etwa 40 %ige Cyclo-C₅-Gemisch destillativ aufgearbeitet wird. Dabei fällt z.B. ein ca. 60 bis 70 %iges Cyclopenten an, welches sich problemlos in Folgereaktionen einsetzen läßt. Höhere Konzentrationen an Cyclopenten (> 90 Gew.-%) können durch weitere destillative Abtrennung des enthaltenen Cyclopentans gewonnen werden.

Die Gewinnung von Cyclopentan kann bei entsprechender Zusammensetzung des im Zuge der Naphthaspaltung anfallenden C₅-Schnittes benutzt werden, um, wie vorerwähnt beschrieben, bei der Schlußdestillation ein n-/iso-Pentan-Gemisch im gewünschten Verhältnis abzutrennen.

Eine weitere besondere Ausführungsart des erfindungsgemäßen Verfahrens ist dadurch gekennzeichnet, daß man bei der fraktionierten Destillation im Anschluß an die katalytische Hydrierung dieses n-/iso-Pentan-Gemisch im gewünschten Verhältnis etwa 10 Böden unterhalb des Kopfabzugs bis etwa 10 Böden oberhalb des Feed als flüssigen Seitenabzug entnimmt. Dabei verwendet man z.B. eine 70-bödige Kolonne, wobei der Feed auf Boden 25 und der flüssige Seitenabzug auf Boden 45 erfolgt.

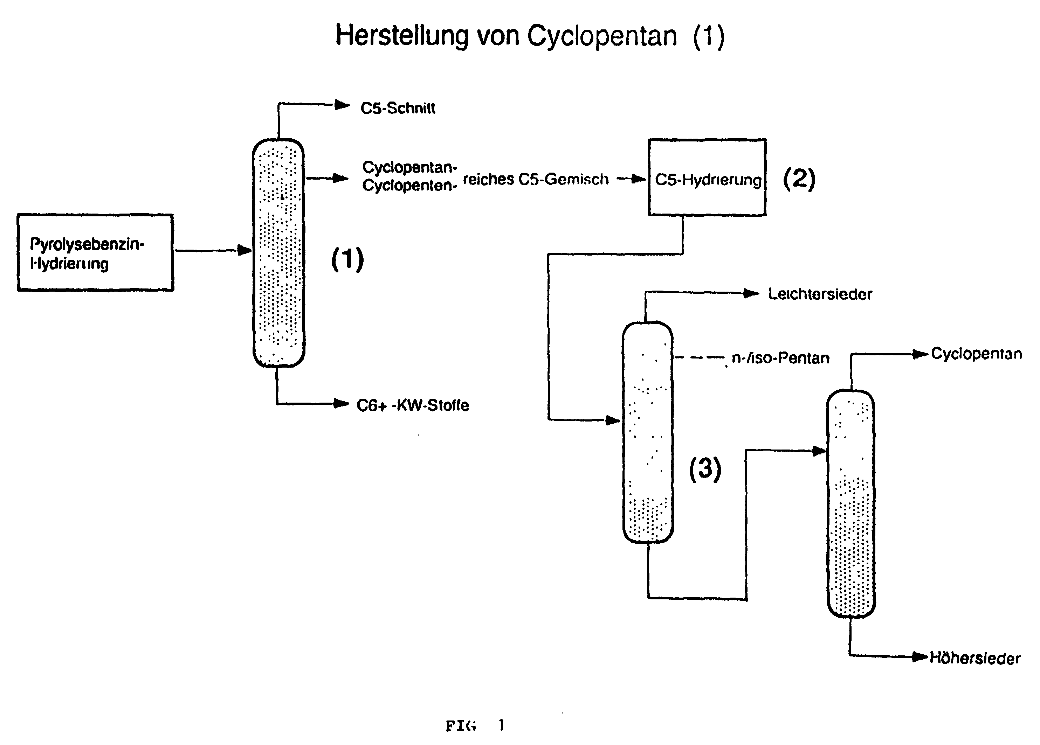

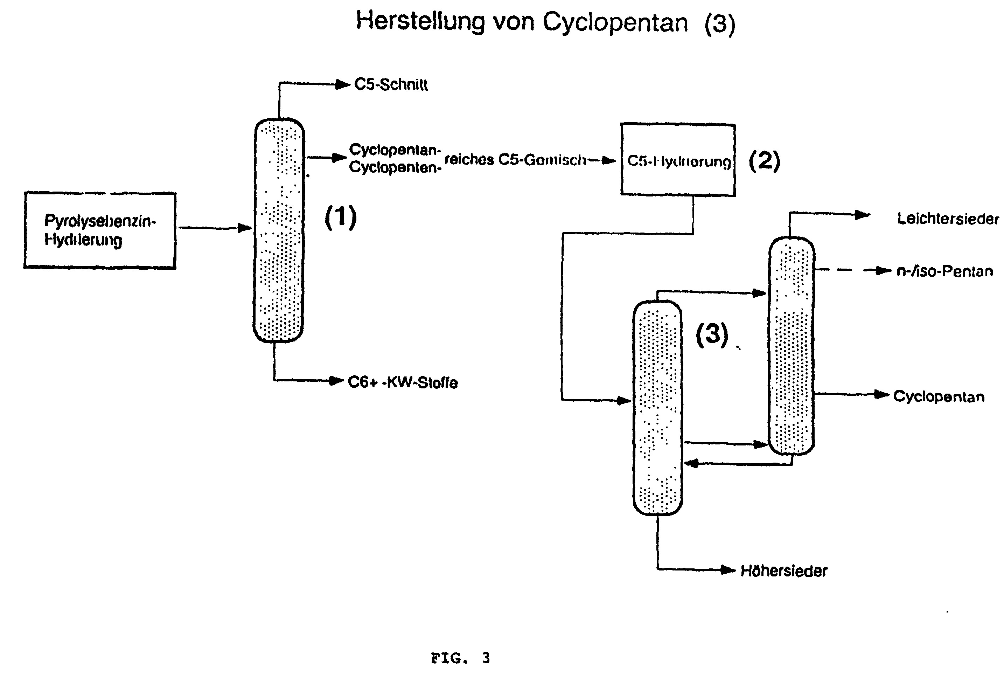

Das erfindungsgemäße Verfahren wird nachfolgend anhand der Figuren 1 bis 4 näher erlautert.
Figur 1 zeigt den schematischen Ablauf des Verfahrens, wobei man beim Steamcracken von Naphtha anfallendes Pyrolysebenzin zuerst einer Selektivhydrierung unterzieht, um die enthaltenen Diene und Acetylene selektiv in die entsprechenden Alkane und Alkene zu überführen. Das resultierende teilhydrierte Produkt wird einer fraktionierten Destillation in einer Kolonne (1) unterworfen, wobei an einem geeigneten Boden, z.B. dem 45. Boden einer 60-bödigen Kolonne seitlich ein Cyclopentan- und Cyclopenten-reiches C₅-Kohlenwasserstoffgemisch entnommen wird. Dieses kann entweder zur Gewinnung von Cyclopenten durch fraktionierte Destillation weiter aufgearbeitet oder einer katalytischen Hydrierung (2) zugeführt werden, wobei das enthaltene Cyclopenten in Cyclopentan überführt, wie auch die begleitenden Olefine zu Aliphaten umgesetzt werden. Die Ausführung der Schlußdestillation erfolgt in einem Zwei-Kolonnensystem (3). Das aus der Hydrierung kommende Aliphatengemisch wird dabei derart aufgetrennt, daß die Leichtsieder in der ersten Destillationskolonne nach der Hydrierung über Kopf abgenommen werden. An geeigneter Stelle im Verstärkungsteil, z.B. dem 45. Boden bei einer 70-bödigen Kolonne, bei der der Feed etwa auf Boden 25 erfolgt, wird ein n-/iso-Pentan-Gemisch im gewünschten Verhältnis (z.B. 4:1) flüssig im Seitenabzug entnommen. Die höhersiedende Fraktion wird vom Sumpf der ersten Kolonne in eine zweite überführt, um dort die vorgegebene Spezifikation des Cyclopentans einzustellen.

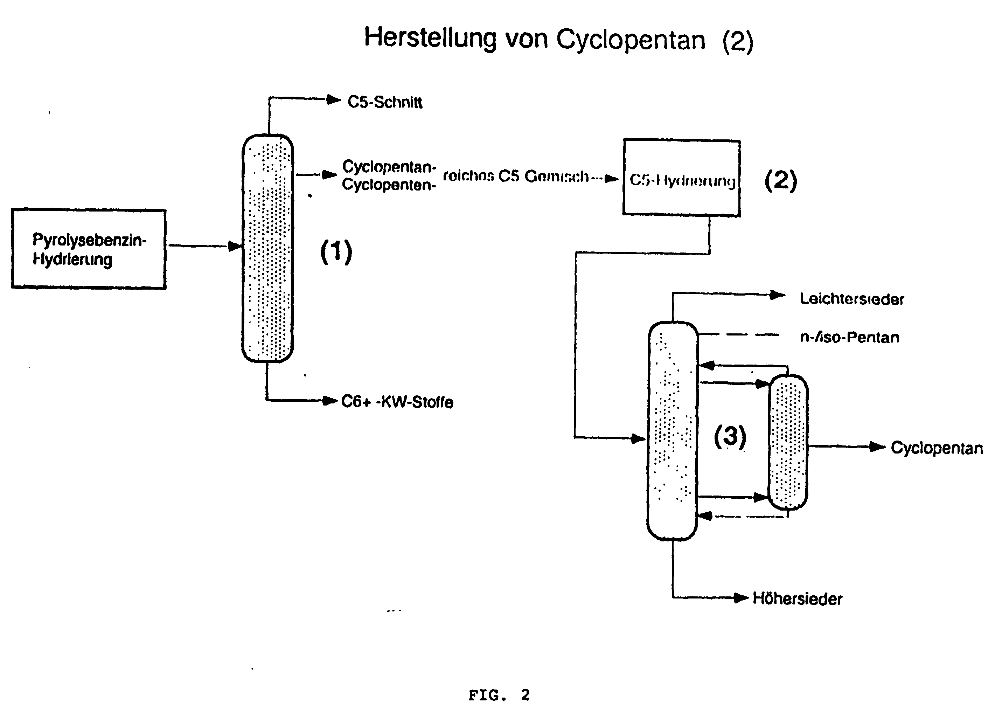

Figuren 2 bis 3 zeigen den schematischen Ablauf des erfindungsgemäßen Verfahrens, wobei die abschließende fraktionierte Destillation des bei der katalytischen Hydrierung (2) erhaltenen C₅-Kohlenwasserstoffgemischs in thermisch gekoppelten Kolonnen (3) erfolgt. Die in Figur 1 beschriebene Verfahrensweise kann so abgeändert werden, daß die zweite Kolonne mit Verstärkungs- und Abtriebsteil der ersten verbunden wird, wobei jeweils gas- bzw. flüssigseitige Verbindungen hergestellt werden. Auf diese Weise können der Energiebedarf gesenkt und separate Aufheizer und gegebenenfalls Kondensatoren eingespart werden. In diesem Fall wird Cyclopentan wiederum im Seitenabzug der zweiten Kolonne entnommen. Das n-/iso-Pentan-Gemisch wird in Abhängigkeit von der Verfahrensweise flüssig im Seitenabzug der ersten oder der zweiten Kolonne entnommen.

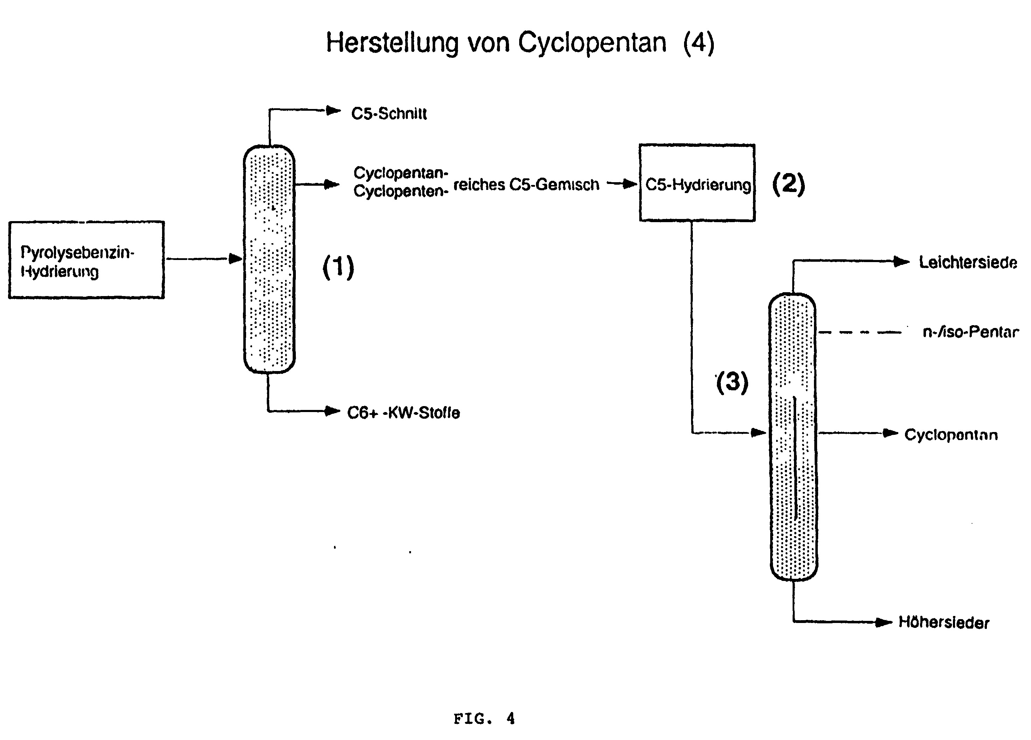

Figur 4 zeigt den schematischen Ablauf des erfindungsgemäßen Verfahrens, wobei die abschließende fraktionierte Destillation des bei der katalytischen Hydrierung (2) erhaltenen C₅-Kohlenwasserstoffgemischs in einer Trennwandkolonne (3) erfolgt. Die Destillationsaufgabe kann gelost werden, indem das hydrierte C₅-Gemisch mittels Trennwandkolonne in die gewünschten Fraktionen Leichtsieder, gegebenenfalls n-/iso-Pentan, Cyclopentan und Höhersieder zerlegt wird.

## Patentansprüche

1. Verfahren zur Gewinnung von Cyclopentan und/oder Cyclopenten durch fraktionierte Destillation von teilhydriertem Pyrolysebenzin,
**dadurch gekennzeichnet, daß** man einer Destillationskolonne, in der das teilhydrierte Pyrolysebenzin fraktioniert wird, an einem geeigneten Boden seitlich ein C₅-Kohlenwasserstoffgemisch mit einer gegenüber dem Kopfprodukt der Destillationskolonne erhöhten Konzentration an Cyclopentan und Cyclopenten entnimmt, dieses Gemisch entweder durch fraktionierte Destillation in Cyclopentan und Cyclopenten zerlegt oder einer katalytischen Hydrierung und anschließend einer fraktionierten Destillation zur Gewinnung von Cyclopentan unterwirft.

2. Verfahren nach Anspruch 1, **dadurch gekennzeichnet, daß** man das C₅-Kohlenwasserstoffgemisch mit erhöhter Konzentration an Cyclopentan und Cyclopenten etwa 5 Böden unterhalb des Kopfabzugs bis etwa 5 Böden oberhalb des Feed als flüssigen Seitenabzug der Destillationskolonne entnimmt.

3. Verfahren nach Anspruch 1, **dadurch gekennzeichnet, daß** man das C₅-Kohlenwasserstoffgemisch mit erhöhter Konzentration an Cyclopentan und Cyclopenten etwa 10 Böden unterhalb des Kopfabzugs bis etwa 10 Böden oberhalb des Feed als flüssigen Seitenabzug der Destillationskolonne entnimmt.

4. Verfahren nach einem der vorhergehenden Ansprüche, **dadurch gekennzeichnet, daß** man als Destillationskolonne für die Fraktionierung des teilhydrierten Pyrolysebenzins eine Kolonne mit etwa 60 Böden verwendet, die etwa auf Boden 30 beschickt wird und bei der etwa auf Boden 45 das C₅-Kohlenwasserstoffgemisch flüssig seitlich abgezogen wird.

5. Verfahren nach Anspruch 1, **dadurch gekennzeichnet, daß** man bei der fraktionierten Destillation im Anschluß an die katalytische Hydrierung zusätzlich ein n-/iso-Pentan-Gemisch im gewünschten Verhältnis an geeigneter Stelle entnimmt.

6. Verfahren nach Anspruch 5, **dadurch gekennzeichnet, daß** man das n-/iso-Pentan-Gemisch im gewünschten Verhältnis etwa 10 Böden unterhalb des Kopfabzugs bis etwa 10 Böden oberhalb des Feed als flüssigen Seitenabzug entnimmt.

7. Verfahren nach Anspruch 5 oder 6, **dadurch gekennzeichnet, daß** man das n-/iso-Pentan-Gemisch im gewünschten Verhältnis etwa 15 Böden unterhalb des Kopfabzugs bis etwa 15 Böden oberhalb des Feed als flüssigen Seitenabzug entnimmt.

8. Verfahren nach einem der Ansprüche 1 und 5 bis 7, **dadurch gekennzeichnet, daß** man als Destillationskolonne für die abschliessende fraktionierte Destillation eine Kolonne mit etwa 70 Böden verwendet, die etwa auf Boden 25 beschickt wird und bei der etwa auf Boden 45 das n-/iso-Pentan-Gemisch flüssig seitlich abgezogen wird.

9. Verfahren nach einem der Ansprüche 1 und 5 bis 7, **dadurch gekennzeichnet, daß** man für die abschliessende fraktionierte Destillation zwei gekoppelte Destillationskolonnen verwendet.

10. Verfahren nach einem der Ansprüche 1 und 5 bis 7, **dadurch gekennzeichnet, daß** man für die abschliessende fraktionierte Destillation eine Trennwandkolonne verwendet.

## Claims

1. A process for producing cyclopentane and/or cyclopentene by fractional distillation of partially hydrogenated pyrolysis gasoline, which comprises taking off from a distillation column, in which the partially hydrogenated pyrolysis gasoline is fractionated, as a sidestream at a suitable tray, a C₅ hydrocarbon mixture having an elevated concentration of cyclopentane and cyclopentene compared to the top product of the distillation column, either fractionating this mixture into cyclopentane and cyclopentene by fractional distillation or subjecting it to a catalytic hydrogenation and subsequent fractional distillation to produce cyclopentane.

2. A process as claimed in claim 1, wherein the C₅ hydrocarbon mixture having an elevated concentration of cyclopentane and cyclopentene is taken off from the distillation column as a liquid sidestream about 5 trays below the top takeoff to about 5 trays above the feed.

3. A process as claimed in claim 1, wherein the C₅ hydrocarbon mixture having an elevated concentration of cyclopentane and cyclopentene is taken off from the distillation column as a liquid sidestream about 10 trays below the top takeoff to about 10 trays above the feed.

4. A process as claimed in one of the preceding claims, wherein, as distillation column for fractionating the partially hydrogenated pyrolysis gasoline, use is made of a column having about 60 trays which is fed at about tray 30 and in which the C₅ hydrocarbon mixture is taken off as a liquid sidestream at about tray 45.

5. A process as claimed in claim 1, wherein in the fractional distillation subsequent to the catalytic hydrogenation, an n-/isopentane mixture is additionally taken off in the desired ratio at a suitable point.

6. A process as claimed in claim 5, wherein the n-/isopentane mixture is taken off in the desired ratio as a liquid sidestream about 10 trays below the top takeoff to about 10 trays above the feed.

7. A process as claimed in claim 5 or 6, wherein the n-/isopentane mixture is taken off in the desired ratio as a liquid sidestream about 15 trays below the top takeoff to about 15 trays above the feed.

8. A process as claimed in one of claims 1 and 5 to 7, wherein, as distillation column for the concluding fractional distillation, use is made of a column having about 70 trays which is fed at about tray 25 and in which the n-/isopentane mixture is taken off as a liquid sidestream at about tray 45.

9. A process as claimed in one of claims 1 and 5 to 7, wherein two coupled distillation columns are used for the concluding fractional distillation.

10. A process as claimed in one of claims 1 and 5 to 7, wherein a divided wall column is used for the concluding fractional distillation.

## Revendications

1. Procédé de production de cyclopentane et/ou de cyclopentène par distillation fractionnée d'essence de pyrolyse partiellement hydrogénée,
**caractérisé en ce qu'**à une colonne de distillation, dans laquelle l'essence de pyrolyse partiellement hydrogénée est fractionnée, on prélève latéralement à un plateau approprié un mélange d'hydrocarbures en C₅ ayant une concentration en cyclopentane et en cyclopentène élevée par rapport au produit de tête de la colonne de distillation, et on décompose ce mélange en cyclopentane et en cyclopentène par distillation fractionnée ou on le soumet à une hydrogénation catalytique et ensuite à une distillation fractionnée pour produire du cyclopentane.

2. Procédé suivant la revendication 1, **caractérisé en ce qu'**on prélève le mélange d'hydrocarbures en C₅ présentant une concentration élevée en cyclopentane et en cyclopentène à environ 5 plateaux en dessous du soutirage de tête jusqu'à environ 5 plateaux au-dessus de l'alimentation, sous la forme d'un soutirage latéral liquide de la colonne de distillation.

3. Procédé suivant la revendication 1, **caractérisé en ce qu'**on prélève le mélange d'hydrocarbures en C₅ présentant une concentration élevée en cyclopentane et en cyclopentène à environ 10 plateaux en dessous du soutirage de tête jusqu'à environ 10 plateaux au-dessus de l'alimentation, sous la forme d'un soutirage latéral liquide de la colonne de distillation.

4. Procédé suivant l'une des revendications précédentes, **caractérisé en ce que**, comme colonne de distillation pour le fractionnement de l'essence de pyrolyse partiellement hydrogénée, on utilise une colonne comprenant environ 60 plateaux, qui est alimentée approximativement au plateau 30 et dans laquelle le mélange d'hydrocarbures en C₅ est soutiré latéralement à l'état liquide approximativement au plateau 45.

5. Procédé suivant la revendication 1, **caractérisé en ce que**, au cours de la distillation fractionnée, on prélève en un endroit approprié, à la suite de l'hydrogénation catalytique, en supplément un mélange de n-/iso-pentane dans le rapport souhaité.

6. Procédé suivant la revendication 5, **caractérisé en ce qu'**on prélève le mélange de n-/iso-pentane dans le rapport souhaité à environ 10 plateaux en dessous du soutirage de tête jusqu'à environ 10 plateaux au-dessus de l'alimentation, sous la forme d'un soutirage latéral liquide.

7. Procédé suivant l'une des revendications 5 et 6, **caractérisé en ce qu'**on prélève le mélange de n-/iso-pentane dans le rapport souhaité à environ 15 plateaux en dessous du soutirage de tête jusqu'à environ 15 plateaux au-dessus de l'alimentation, sous la forme d'un soutirage latéral liquide.

8. Procédé suivant l'une des revendications 1 et 5 à 7, **caractérisé en ce que**, comme colonne de distillation pour la distillation fractionnée ultérieure, on utilise une colonne présentant environ 70 plateaux, qui est alimentée approximativement au plateau 25 et dans laquelle le mélange de n-/iso-pentane est soutiré latéralement à l'état liquide approximativement au plateau 45.

9. Procédé suivant l'une des revendications 1 et 5 à 7, **caractérisé en ce qu'**on utilise deux colonnes de distillation couplées pour la distillation fractionnée ultérieure.

10. Procédé suivant l'une des revendications 1 et 5 à 7, **caractérisé en ce qu'**on utilise une colonne à paroi de séparation pour la distillation fractionnée ultérieure.
